# EUROPÄISCHE PATENTSCHRIFT

(11) **EP 2 129 543 B1**
(45) Veröffentlichungstag und Bekanntmachung des Hinweises auf die Patenterteilung: **30.10.2013**
(21) Anmeldenummer: 08715976.0
(22) Anmeldetag: 22.02.2008
(51) Int. Cl.: B60N 2/48, B60N 2/30, B60N 2/01, B60N 2/20

(54) **FAHRZEUGSITZ**
VEHICLE SEAT
SIÈGE DE VÉHICULE

(30) Priorität: 26.02.2007 DE 102007009622; 16.03.2007 DE 102007013376; 09.11.2007 DE 102007053958
(43) Veröffentlichungstag der Anmeldung: 09.12.2009
(73) Patentinhaber: Johnson Controls GmbH, 51399 Burscheid (DE)
(72) Erfinder: LINDLEY, Miles, 51519 Odenthal (DE); TABELLION, Joerg, 51519 Odenthal (DE); GANESAN, Annal, Ponnarasu, 51381 Leverkusen (DE); FAHL, Michael, 51491 Overath (DE); BALLA, Raghu, 42277 Wuppertal (DE)
(74) Vertreter: Wolff, Felix
(86) Internationale Anmeldenummer: PCT/EP2008/001425
(87) Internationale Veröffentlichungsnummer: WO 2008/104333

(56) Entgegenhaltungen:
- EP-A- 1 075 983
- GB-A- 2 323 526
- JP-A- 9 002 113
- JP-A- 2001 130 304

## Beschreibung

Die Erfindung betrifft einen Fahrzeugsitz mit mindestens einem ersten und einem zweiten Sitzsegment, insbesondere eine Rücksitzbank für ein Kraftfahrzeug, insbesondere mit einem mittleren Sitzsegment und zwei seitlichen Sitzsegmenten.

Derartige Fahrzeugsitze sind beispielsweise aus der WO 2005/077708 A2, der DE 103 92 187 T5 sowie der DE 10 2004 017 655 A1 bekannt. Weiteren Stand der Technik stellen die Druckschriften EP 1 449 710 A2, EP 0 769 410 A2, JP 09002113 sowie die JP 2001130304 A dar, wobei die JP 09002113A einen Fahrzeugsitz lehrt, der ein zweites Segment aufweist, das unter dem Sitzteil eines ersten Segments verstaubar ist. Die dort beschriebenen Fahrzeugsitze sind jedoch vergleichsweise aufwändig zu fertigen und benötigen relativ viel Platz für die jeweilige Schwenkbewegung. Darüber hinaus genügen die mittleren Sitze oftmals nicht den jeweils gültigen Sicherheitsbestimmungen und/oder weisen einen vergleichsweise geringen Komfort auf.

Es war deshalb die Aufgabe der vorliegenden Erfindung, einen Fahrzeugsitz zur Verfügung zu stellen, der die Nachteile des Standes der Technik nicht aufweist.

Gelöst wird die Aufgabe mit einem Fahrzeugsitz gemäß Anspruch 1.

Die efindungsgemäße Sitzbank weist ein erstes Segment auf, das sich neben einem zweiten Segment befindet. Vorzugsweise sind zwei erste Sitzsegmente vorhanden, die sich rechts und links neben dem zweiten Segment befinden. Die Segmente bilden vorzugsweise eine Sitzbank, insbesondere eine Rücksitzbank, die besonders bevorzugt quer zur Fahrtrichtung des Kraftfahrzeuges angeordnet ist. Bei dem zweiten Segment handelt es sich demnach vorzugsweise um das mittlere Segment einer dreisitzigen Bank. Weiterhin ist erfindungsgemäß vorgesehen, dass ein zweites Sitzsegment unterhalb des Sitzteils eines ersten Sitzsegments verstaubar ist und dass die Rückenlehne des zweiten Sitzsegmentes kollabierbar ausgeführt ist.

Der erfindungsgemäße Fahrzeugsitz ist einfach und kostengünstig herstellbar. Die seitliche Schwenkbewegung des Sitzes erfordert keinen zusätzlichen Raum zwischen dem erfindungsgemäßen Fahrzeugsitz und davor angeordneten Sitzen. Dadurch, dass die Rückenlehne des zweiten Sitzsegmentes kollabierbar ausgeführt ist, benötigt das zweite Sitzsegment vergleichsweise wenig Stauraum, obwohl im Gebrauchszustand ein Fahrzeugsitz zur Verfügung gestellt werden kann, der allen geforderten Sicherheitsvorschriften genügt und einen vergleichsweise hohen Komfort bietet.

Kollabierbar oder Kollabieren im Sinne der Erfindung bedeutet, dass die Rückenlehne des zweiten Sitzsegmentes mindestens in einer Dimension, insbesondere in der Längsausdehnung, reversibel reduzierbar ist. Vorzugsweise wird die Rückenlehne in ihrer Länge so reduziert, dass diese geringer ist, als die Länge des Sitzteils des ersten Sitzsegmentes. Dasselbe gilt für die Breite, sofern diese ebenfalls kollabierbar ausgeführt ist.

Das Kollabieren der Rückenlehne erfolgt beim oder vor dem Verstauen des zweiten Sitzsegmentes. Insbesondere erfolgt das Kollabieren bei einer Drehung der Rückenlehne von einer im wesentlichen vertikalen Gebrauchs- in eine im wesentlichen vertikalen Verstauposition, in der sich die Rückenlehne parallel zum Sitzteil befindet.

Vorzugsweise erfolgt das Kollabieren durch Zusammenschieben der Tragkonstruktion der Rückenlehne, besonders bevorzugt in Abhängigkeit von der Drehbewegung der Rückenlehne von der Gebrauchs- in eine Verstaustellung. Das Kollabieren erfolgt beispielsweise durch ein Getriebe, welches insbesondere mit der Tragkonstruktion, beispielsweise einem Teleskoprohr, wirkverbunden ist. Das Kollabieren der Rückenlehne kann auch durch beliebige andere Mittel, beispielsweise hydraulisch, pneumatisch, elektrisch, mit einem Schneckengetriebe oder dergleichen erfolgen. Beim Kollabieren kann eine Feder gespannt werden, die das spätere Entfalten der Rückenlehne, wenn sie wieder von der Verstau- in die Gebrauchsposition verbracht wird, erleichtert.

Vorzugsweise weist die Rückenlehne einen balgenartig ausziehbaren Bereich auf, welcher sich besonders bevorzugt an den unteren Teil des Lehnenpolsters anschließt und die Lücke zum Sitzteil im Wesentlichen verdeckt. Der Antrieb der Tragstruktur der Rückenlehne erfolgt beispielsweise wie oben beschrieben. Der balgenartige Bereich besteht vorzugsweise aus einem über das Lehnenpolster herausragenden Teil des Sitzbezugs, welcher zur Ausbildung von Sollknickstellen mit entsprechend verlaufenden Nähten oder Versteifungen versehen ist.

Weiterhin bevorzugt kann es vorgesehen sein, dass die Kontur der Rückenlehne beim Klappen auf das Sitzteil reversibel verflacht wird, um die Höhe des zweiten Sitzsegmentes vor dem Verstauen zu reduzieren.

Vorzugsweise weist das zweite Sitzsegment eine Rückenlehne auf, die besonders bevorzugt auf das Sitzteil klappbar ist.

Weiterhin bevorzugt weist das erste Segment ein Sitzteil auf, das so verschwenkbar ist, dass ein sich darunter befindlicher Stauraum freigegeben wird, in den das zweite Sitzsegment dann hinein schwenkbar ist. Dafür wird dieses Sitzteil vorzugsweise in eine im Wesentlichen vertikale Position geklappt. Vorzugsweise wird das Sitzteil von einer im Wesentlichen horizontalen Stellung um 90° in eine im Wesentlichen vertikale Stellung geschwenkt.

Vorzugsweise erfolgt das Klappen der Rückenlehne des zweiten Sitzsegments und das Schwenken des Sitzteils des ersten Segments im Wesentlichen gleichzeitig.

Erfindungsgemäß ist das Sitzteil und die Rückenlehne des zweiten Sitzsegmentes in den Stauraum unter dem Sitzteil des ersten Sitzsegmentes verschwenkbar angeordnet. Besonders bevorzugt ist dafür an dem Sitzteil des ersten Sitzsegmentes ein Drehmittel, insbesondere eine Drehachse oder ein Drehgelenk, angeordnet, die/das sich ganz besonders bevorzugt zwischen den Sitzteilen des ersten und des zweiten Sitzsegmentes befindet. Auch wenn zwei erste Sitzsegmente rechts und links von dem zweiten, mittleren Sitzsegment angeordnet sind, so ist das zweite Sitzsegment erfindungsgemäß nur mit einem ersten Sitzsegment schwenkbar verbunden. Diese Ausführungsform der vorliegenden Erfindung hat den Vorteil, dass ein erstes Sitzsegment losgelöst von den anderen Sitzsegmenten aus dem Fahrzeug entfernt oder in seiner Lage innerhalb des Fahrzeuges verändert werden kann.

Erfindungsgemäß ist eine Verbindung zwischen einem zweiten Sitzsegment und einem ersten Sitzsegment vorhanden, die vorzugsweise beim Vorklappen des Sitzteils des anderen ersten Sitzsegmentes entriegelt wird. Diese Verbindung besteht besonders bevorzugt zwischen dem zweiten Sitzsegment und dem ersten Sitzsegment, das nicht schwenkbar mit dem zweiten Sitzsegment verbunden ist. Die Verbindung dient vorzugsweise der Versteifung des gesamten Fahrzeugsitzes.

Vorzugsweise ist das erste Sitzsegment, insbesondere das erste Sitzsegment unter dem das erste Sitzsegment verstaut wird, höhenverstellbar angeordnet. Diese bevorzugte Ausführungsform der vorliegenden Erfindung hat den Vorteil, dass mehr Stauraum für das zweite Sitzsegment zur Verfügung gestellt werden kann.

Ein weiterer Gegenstand der vorliegenden Erfindung ist ein Verfahren zur Verstauung eines Sitzsegmentes unter einem seitlich angeordneten Sitzsegment, aufweisend die folgenden Schritte:
a. Klappen einer Rückenlehne des zweiten Sitzsegmentes auf ein Sitzteil des zweiten Sitzsegments,
b. Kollabieren der Rückenlehne,
c. Klappen eines Sitzteils eines ersten Segmentes zur Freigabe eines Stauraums unter dem Sitzteil des ersten Sitzsegmentes,
d. Seitliches Verschwenken des Sitzteils und der Rückenlehne des zweiten Sitzsegmentes in den Stauraum.

Die zu dem erfindungsgemäßen Fahrzeugsitz gemachten Ausführungen gelten für das erfindungsgemäße Verfahren gleichermaßen.

Vorzugsweise erfolgen die Verfahrensschritte a. und b. im wesentlichen gleichzeitig oder in beliebiger Reihenfolge.

Vorzugsweise wird beim Vorklappen der Rückenlehne des zweiten Segmentes eine Verbindung zwischen dem ersten Segment und dem zweiten Segment gelöst. Dieser Verfahrensschritt wird vorzugsweise dann ausgeführt, wenn zwei erste Segmente vorhanden sind, wobei sich eins rechts und eins links von dem zweiten Segment befinden. Die Verbindung zu einem dieser beiden ersten Segmente wird dann gelöst.

Vorzugsweise wird das erste Sitzsegment in seiner Höhe verstellt, wodurch der sich darunter befindliche Stauraum vergrößert wird. In diesen Stauraum kann dann das zweite Sitzsegment verstaut werden.

Erfindungsgemäß ist die Rückenlehne des zweiten Segmentes kollabierbar gestaltet. Dadurch kann die Rückenlehne in ihrer Länge reduziert werden, so dass sie weniger Stauraum benötigt.

Im Folgenden werden die Erfindungen anhand der Figuren 1 - 5 erläutert. Diese Erläuterungen sind lediglich beispielhaft und schränken den allgemeinen Erfindungsgedanken nicht ein. Die Erläuterungen gelten für alle Erfindungsgegenstände gleichermaßen.
- **Figuren 1a - 1f**: zeigen das Verstauen des ersten Sitzsegmentes.
- **Figuren 2a - 2f**: zeigen das Rausklappen des ersten Sitzsegmentes
- **Figuren 3a, 3b**: zeigen eine Ausführungsform der kollabierbaren Rückenlehne
- **Figuren 4a, 4b**: zeigen eine weitere Ausführungsform der kollabierbaren Rückenlehne
- **Figuren 5a, 5b**: zeigen eine dritte Ausführungsform der kollabierbaren Rückenlehne

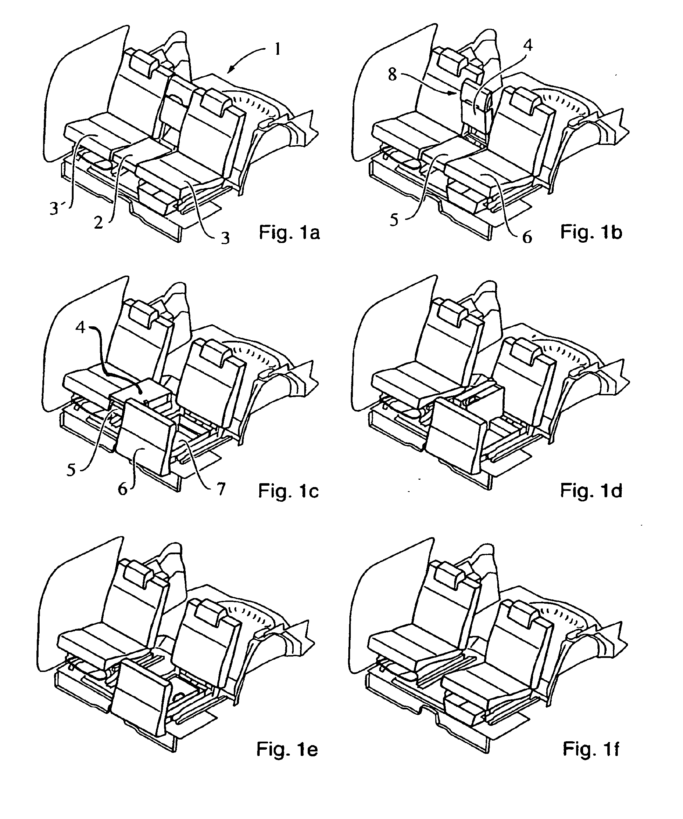

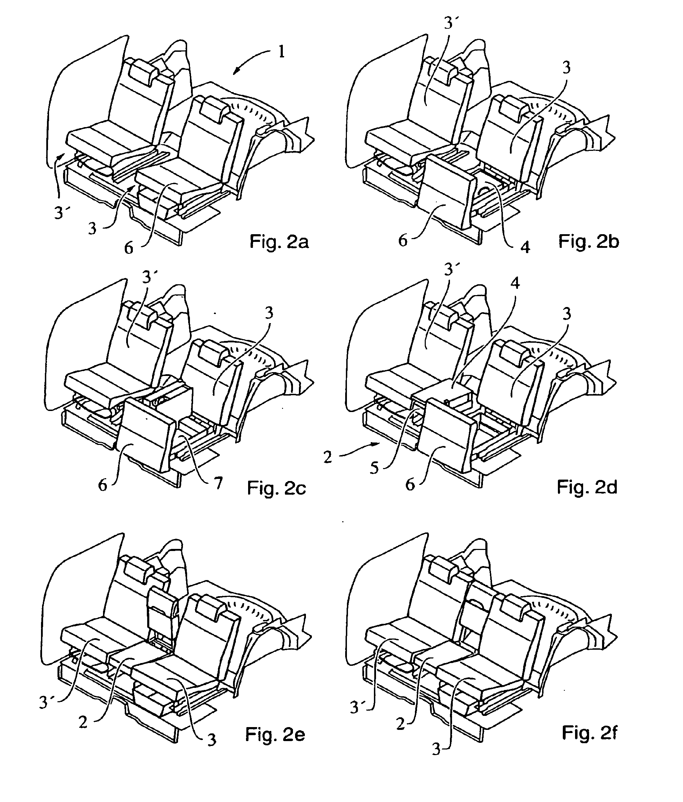

Die in Figur 1 a in Gebrauchsstellung gezeigte Rücksitzbank 1 besteht aus einem mittleren zweiten Sitzsegment 2 und zwei seitlichen ersten Sitzsegmenten 3, 3'. Die Rückenlehne 4 des mittleren Sitzsegments 2 ist, wie aus den Figuren 1b und 1c ersichtlich, um etwa 90° nach vorne auf das zugehörige Sitzteil 5 in eine waagerechte Stellung klappbar. Das Sitzteil 6 des Sitzsegments 3 wird gleichfalls um 90° nach vorne in eine vertikale Position geklappt und gibt einen unterhalb des Sitzteils 6 befindlichen Stauraum 7 frei (Figur 1d). Das mittlere Sitzsegment 2 kann nun zur Seite in diesen Stauraum geschwenkt werden. Nach dem Zurückklappen des Sitzteils 6 (Figur 1f) befindet sich das seitliche Sitzsegment 3 wieder in Gebrauchsstellung. Die zwischen den seitlichen Sitzsegmenten 3, 3' entstandene Lücke kann beispielsweise als Durchstieg oder zur Beförderung langer Ladegüter genutzt werden. Die Verlagerung in die Initialstellung erfolgt sinngemäß in umgekehrter Reihenfolge (Figur 2a bis 2f).

Das mittlere Sitzsegment 2 ist vorzugsweise unmittelbar am seitlichen Sitzsegment 3 gelenkig befestigt, so dass das andere seitliche Sitzsegment 3' unabhängig davon aus dem Fahrzeug entnommen werden kann. Die Entriegelung der Drehachsen von Rückenlehne 4 und Paket aus Rückenlehne 4 und Sitzteil 5 erfolgt vorzugsweise durch das Vorklappen des Sitzteils 6 des seitlichen Sitzsegments 3.

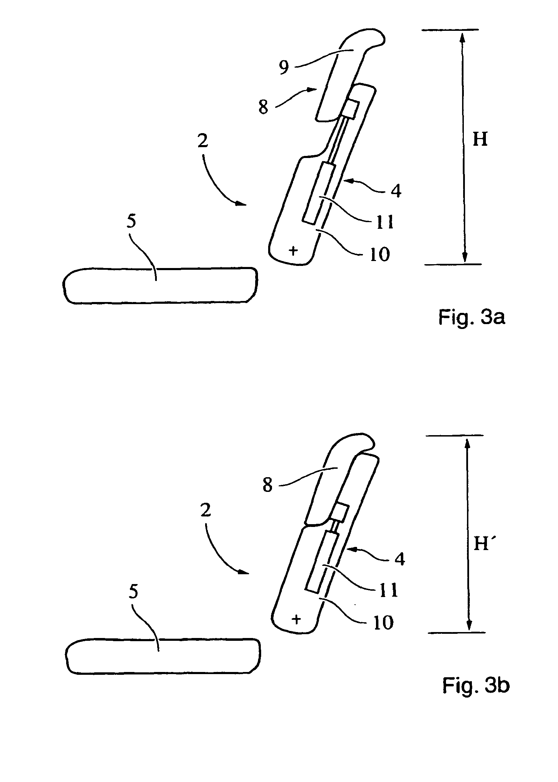

Um die Größe des zu verstauenden Sitzpakets zu verringern, ist die Rückenlehne 4 des mittleren Sitzteils kollabierbar ausgebildet, kann also in ihrer (in Gebrauchsstellung gesehen) Höhe H auf eine Höhe H' verkleinert werden. Hierzu wird (siehe Figur 3a) der obere Teil 8 der Rückenlehne 4, welcher auch die Kopfstütze 9 des mittleren Sitzsegments 2 ausbildet, vor oder während des Klappens auf das Sitzteil 5 manuell in Richtung des unteren Teils 10 der Rückenlehne 4 verlagert (Figur 3b). Zur Führung wird im Ausführungsbeispiel ein Teleskoprohr 11 eingesetzt, denkbar ist jedoch auch der Einsatz von Schienensystemen.

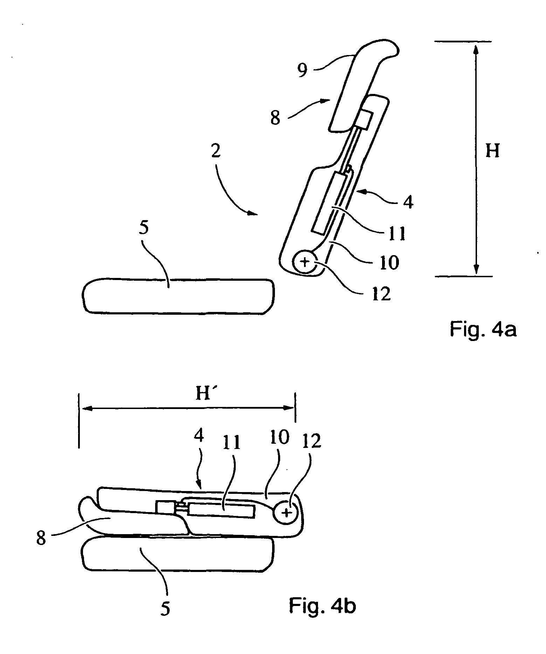

Bei der Ausbildung nach Figur 4a, b erfolgt das Zusammenschieben von der Höhe H auf die Höhe H' in Abhängigkeit von der Drehbewegung der Rückenlehne 4 durch ein Getriebe 12, welches mit dem Teleskoprohr 11 wirkverbunden ist. Der Kollaps der Rückenlehne 4 kann auch durch beliebige andere Mittel, beispielsweise hydraulisch, pneumatisch, elektrisch, Schneckengetriebe oder dergleichen, erfolgen.

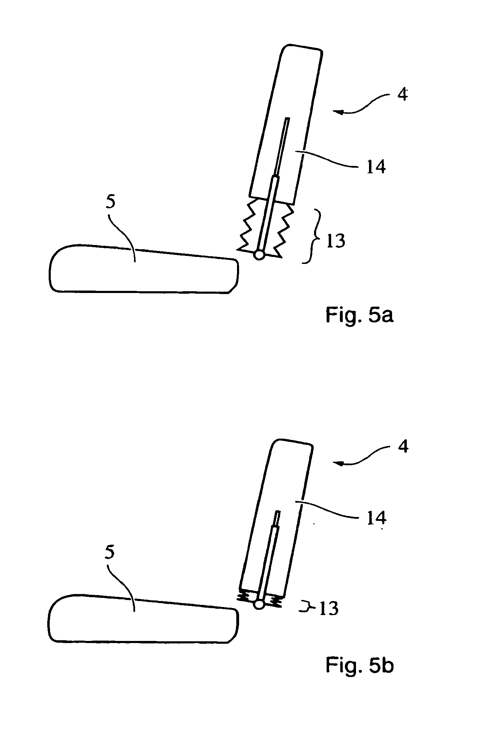

Bei der Ausbildung nach Figur 5 ist die Rückenlehne durch einen balgenartig ausziehbaren Bereich 13 kollabierbar ausgebildet, welcher sich an den unteren Teil des Lehnenpolsters 14 anschließt und die Lücke zum Sitzteil 5 im Wesentlichen verdeckt. Der Antrieb des Lehnenpolsters 14 erfolgt vorzugsweise unter Verwendung der in Figur 3 und 4 zur Verlagerung des oberen Lehnenteils 8 gedachten Mittel.

Der balgenartige Bereich 13 besteht vorzugsweise aus einem über das Lehnenpolster 14 herausragenden Teil des Sitzbezugs, welcher zur 10 Ausbildung von Sollknickstellen mit entsprechend verlaufenden Nähten oder Versteifungen versehen ist.

### Bezugszeichenliste

- 1: Rücksitzbank
- 2: zweites Sitzsegment (mittig)
- 3, 3': erstes Sitzsegment (seitlich)
- 4: Rückenlehne (des mittleren Sitzsegments 2)
- 5: Sitzteil (des mittleren Sitzsegments 2)
- 6: Sitzteil (des seitlichen Sitzsegments 3)
- 7: Stauraum
- 8: (oberer) Teil der Rückenlehne 4
- 9: Kopfstütze
- 10: (unterer) Teil der Rückenlehne 4
- 11: Teleskoprohr
- 12: Getriebe
- 13: Bereich (balgenartig)
- 14: Lehnenpolster

## Patentansprüche

1. Fahrzeugsitz (1) mit mindestens einem ersten Segment (3, 3') mit einem Sitzteil (6) und einem zweiten Segment (2) mit einem Sitzteil (5) sowie einer Rückenlehne (4), wobei das zweite Segment (2) unter dem Sitzteil (6) verstaubar ist, **dadurch gekennzeichnet, dass** die Rückenlehne (4) kollabierbar ausgeführt ist, das zweite Sitzsegment (2) nur mit einem ersten Sitzsegment (3, 3') schwenkbar verbunden ist und eine Verbindung zwischen dem ersten Sitzsegment (3, 3') und dem zweiten Sitzsegment (2) beim Vorklappen des Sitzteils (6) entriegelt.

2. Fahrzeugsitz nach Anspruch 1, **dadurch gekennzeichnet, dass** die Rückenlehne (4) auf das Sitzteil (5) klappbar ist.

3. Fahrzeugsitz nach Anspruch 2, **dadurch gekennzeichnet, dass** das Kollabieren der Rückenlehne beim Klappen auf den Sitzteil (5) erfolgt.

4. Fahrzeugsitz nach einem der voranstehenden Ansprüche, **dadurch gekennzeichnet, dass** der Sitzteil (6) so in eine im Wesentlichen vertikale Position klappbar ist, dass der Stauraum (7) verfügbar ist.

5. Fahrzeugsitz nach einem der Ansprüche 2 - 4, **dadurch gekennzeichnet, dass** das Klappen der Rückenlehne (4) und des Sitzteils (6) im Wesentlichen gleichzeitig erfolgt.

6. Fahrzeugsitz nach einem der voranstehenden Ansprüche, **dadurch gekennzeichnet, dass** das Sitzteil (5) und die Rückenlehne (4) in den Stauraum verschwenkbar angeordnet ist.

7. Fahrzugsitz nach einem der voranstehenden Ansprüche, **dadurch gekennzeichnet, dass** das Sitzsegment (3, 3') höhenverstellbar angeordnet ist.

8. Verfahren zur Verstauung eines Sitzsegmentes (2) unter einem seitlich angeordneten Sitzsegment (3, 3'), aufweisend die folgenden Schritte:
a. Klappen einer Rückenlehne (4) des Sitzsegmentes (2) auf ein Sitzteil (5) des Sitzsegments (2),
b. Kollabieren der Rückenlehne (4),
c. Klappen eines Sitzteils (6) des Segmentes (3, 3') zur Freigabe eines Stauraums (7) unter dem Sitzteil (6),
d. Seitliches Verschwenken des Sitzteils (5) und der Rückenlehne (4) in den Stauraum (7).

9. Verfahren nach Anspruch 8, **dadurch gekennzeichnet, dass** die Verfahrensschritte a. und b. im wesentlichen gleichzeitig oder in beliebiger Reihenfolge erfolgen.

10. Verfahren nach einem der voranstehenden Ansprüche, **dadurch gekennzeichnet, dass** beim Vorklappen der Rückenlehne (4) eine Verbindung zwischen dem Segment (2) und dem Segment (3, 3') gelöst wird.

11. Verfahren nach einem der voranstehenden Ansprüche, **dadurch gekennzeichnet, dass** das Sitzsegment (3, 3') in seiner Höhe verstellt wird.

## Claims

1. Vehicle seat (1) comprising at least one first segment (3, 3') with a seat part (6) and a second segment (2) with a seat part (5) as well as a backrest (4), the second segment (2) is stowable underneath the seat part (6), **characterized in that** the backrest (4) is designed to be collapsible, the second seat segment (2) is pivotably connected to only one first seat segment (3, 3') and a connection between the first seat segment (3, 3') and the second seat segment (2) is released when folding forward the seat part (6).

2. Vehicle seat according to Claim 1, **characterized in that** the backrest (4) is foldable onto the seat part (5).

3. Vehicle seat according to Claim 2, **characterized in that** the collapsing of the backrest (4) takes place when folding onto the seat part (5).

4. Vehicle seat according to one of the preceding claims, **characterized in that** the seat part (6) is foldable into a substantially vertical position such that the stowage space (7) is available.

5. Vehicle seat according to one of Claims 2-4, **characterized in that** the folding of the backrest (4) and the seat part (6) takes place substantially at the same time.

6. Vehicle seat according to one of the preceding claims, **characterized in that** the seat part (5) and the backrest (4) are arranged to be pivotable into the stowage space.

7. Vehicle seat according to one of the preceding claims, **characterized in that** the seat segment (3, 3') is arranged in a height-adjustable manner.

8. Method for stowing a seat segment (2) under a laterally arranged seat segment (3, 3'), comprising the following steps:
a folding a backrest (4) of the seat segment (2) onto a seat part (5) of the seat segment (2),
b collapsing the backrest (4),
c folding a seat part (6) of the segment (3, 3') to open up a stowage space (7) under the seat part (6),
d pivoting the seat part (5) and the backrest (4) to the side into the stowage space (7).

9. Method according to Claim 8, **characterized in that** the method steps a and b take place substantially at the same time or in any sequence.

10. Method according to one of the preceding claims, **characterized in that** when folding forward the backrest (4), a connection between the segment (2) and the segment (3, 3') is released.

11. Method according to one of the preceding claims, **characterized in that** the seat segment (3, 3') is adjusted in its height.

## Revendications

1. Siège de véhicule (1) avec au moins un premier segment (3, 3') avec une partie d'assise (6) et un deuxième segment (2) avec une partie d'assise (5) ainsi qu'un dossier (4), dans lequel le deuxième segment (2) peut être rangé sous la partie d'assise (6), **caractérisé en ce que** le dossier (4) est réalisé sous forme compactable, le deuxième segment (2) n'est relié de façon pivotante qu'à un premier segment de siège (3, 3') et une liaison entre le premier segment de siège (3, 3') et le deuxième segment de siège (2) se déverrouille lors du basculement de la partie d'assise (6) vers l'avant.

2. Siège de véhicule selon la revendication 1, **caractérisé en ce que** le dossier (4) est rabattable sur la partie d'assise (5).

3. Siège de véhicule selon la revendication 2, **caractérisé en ce que** le compactage du dossier (4) est réalisé lors du rabattement sur la partie d'assise (5).

4. Siège de véhicule selon l'une quelconque des revendications précédentes, **caractérisé en ce que** la partie d'assise (6) peut être basculée dans une position essentiellement verticale, de telle manière que l'espace de rangement (7) soit disponible.

5. Siège de véhicule selon l'une quelconque des revendications 2 à 4, **caractérisé en ce que** le rabattement du dossier (4) est effectué essentiellement en même temps que le basculement de la partie d'assise (6).

6. Siège de véhicule selon l'une quelconque des revendications précédentes, **caractérisé en ce que** la partie d'assise (5) et le dossier (4) sont disposés de façon pivotante dans l'espace de rangement.

7. Siège de véhicule selon l'une quelconque des revendications précédentes, **caractérisé en ce que** le segment de siège (3, 3') est disposé de façon réglable en hauteur.

8. Procédé de rangement d'un segment de siège (2) sous un segment de siège (3, 3') disposé à côté, comprenant les étapes suivantes:
a. rabattre un dossier (4) du segment de siège (2) sur une partie d'assise (5) du segment de siège (2),
b. compacter le dossier (4),
c. basculer une partie d'assise (6) du segment (3, 3') pour libérer un espace de rangement (7) en dessous de la partie d'assise (6),
d. pivoter latéralement la partie d'assise (5) et le dossier (4) dans l'espace de rangement (7).

9. Procédé selon la revendication 8, **caractérisé en ce que** les étapes de procédé a. et b. sont exécutées essentiellement en même temps ou dans un ordre quelconque.

10. Procédé selon l'une quelconque des revendications précédentes, **caractérisé en ce que** l'on libère une liaison entre le segment (2) et le segment (3, 3') lors du rabattement du dossier (4) vers l'avant.

11. Procédé selon l'une quelconque des revendications précédentes, **caractérisé en ce que** l'on règle le segment de siège (3, 3') en hauteur.
